# EUROPÄISCHE PATENTSCHRIFT

(11) **EP 4 011 515 B1**
(45) Veröffentlichungstag und Bekanntmachung des Hinweises auf die Patenterteilung: **22.11.2023**
(21) Anmeldenummer: 20213457.3
(22) Anmeldetag: 11.12.2020
(51) Int. Cl.: B21C 23/14, B21C 23/18, B21C 23/22, B21C 27/00, B21C 31/00, B21C 37/04, B29C 48/48, B29C 48/49, B30B 11/22, B30B 11/26, B30B 15/30

(54) **VERFAHREN UND VORRICHTUNG ZUM KOAXIALEN STRANGPRESSEN EINES STRANGPRESSPRODUKTS**
METHOD AND DEVICE FOR COAXIAL EXTRUSION OF EXTRUDED PRODUCT
PROCÉDÉ ET DISPOSITIF D'EXTRUSION COAXIALE D'UN PRODUIT EXTRUDÉ

(43) Veröffentlichungstag der Anmeldung: 15.06.2022
(73) Patentinhaber: Technische Universität Berlin, 10623 Berlin (DE)
(72) Erfinder: MÜLLER, Sören, 12169 Berlin (DE); NITSCHKE, René, 10249 Berlin (DE); GALL, Sven, 12169 Berlin (DE); GENSCH, Felix, 16540 Hohen Neuendorf (DE)
(74) Vertreter: Bittner, Thomas L.

(56) Entgegenhaltungen:
- EP-A1- 1 693 124
- DE-A1-102004 029 588
- JP-A- H0 760 340
- JP-A- S6 072 610
- JP-A- H04 157 014
- US-A1- 2004 074 275

## Beschreibung

Die Erfindung bezieht sich auf ein Verfahren und eine Vorrichtung zum koaxialen Strangpressen eines Strangpressprodukts.

### Hintergrund

Das Strangpressen stellt im Bereich der Massivumformung eine energieeffiziente Möglichkeit dar, aus Vormaterial mittels nur eines Umformschritts als Strangpressprodukt insbesondere endkonturnahe Halbzeuge herzustellen. Verschiedene Werkstoffe können verarbeitet werden. Neben Leichtmetallen wie Aluminium, Magnesium und Titan lassen sich zum Beispiel auch Eisenmetalle, Buntmetalle und Edelmetalle sowie deren Legierungen in Form bringen. Die Prozesstemperaturen können hierbei bis zu etwa 1300 °C betragen, können aber auch unterhalb 0 °C liegen. Das Verfahren ermöglicht es, engste Formtoleranzen einzuhalten und darüber hinaus über die Mikrostruktur die chemischen und physikalischen Eigenschaften der Pressprodukte den spezifischen Anforderungen der Endprodukte anzupassen. Als Ausgangmaterial eignen sich außer Gussvormaterial beispielweise auch Schmiedezwischenprodukte und Pulverwerkstoffe.

Den immer umfangreicheren Anforderungsprofilen für Struktur- und Funktionsbauteile sowohl im Automotive- als auch im Transport-, Energie-, Medizin- und Luftfahrtbereich wird zunehmend mit belastungsangepassten Konzepten begegnet. Dazu gehören neben querschnittsoptimierten Geometrien auch vermehrt Hybridkonzepte, in denen unterschiedliche Werkstoffe oder Legierungen lokale Anwendung im Bauteil finden. Allen diesen Konzepten gemein ist die Notwendigkeit eines zusätzlichen Fügeprozesses für die Herstellung einer stoff-, kraft- oder formschlüssigen Verbindung. Diese findet entweder vor oder im Anschluss an die endkonturnahe Formgebung statt.

Um Metalle stoffschlüssig miteinander zu verbinden, müssen die reinen Metalloberflächen einander bis auf einen Atomabstand angenähert werden. Hierbei müssen sowohl ein ausreichend hoher Druck als auch eine ausreichend hohe Temperatur herrschen, um die Oberflächenrauheit einzuebnen und die nötige Annäherung zu erzeugen sowie die für die chemische Bindung notwendigen Diffusionsvorgänge zu ermöglichen. Da Metalloberflächen im Allgemeinen mit Verunreinigungen und Oxiden belegt sind, müssen die "reinen" Oberflächen zunächst freigelegt werden, um eine Verbindung auf atomarer Ebene erzeugen zu können. Damit dies gelingt, müssen die Berührungsflächen der beiden Metallvolumina in hinreichendem Maße vergrößert werden. Die Deckschichten dürfen sich jedoch nicht bzw. im Verhältnis zur Berührungsfläche nur in sehr geringem Maß vergrößern.

Eine Möglichkeit die Oberflächen von Fügepartnern aufzureißen besteht darin, diese unter Einfluss von Normalspannungen aneinander zu scheren. Hierbei wird die Oberfläche durchgeknetet und dadurch vergrößert, wodurch die Verunreinigungen und Oxide aufreißen, so dass die reine Metalloberfläche freigelegt wird. In Abhängigkeit von der Höhe der eingebrachten Scherung lassen sich einerseits die Verunreinigungen und Oxide stark zerkleinern und andererseits die Oberfläche signifikant vergrößern.

Das Strangpressen bietet grundsätzlich die Möglichkeit, getrennte Materialströme während der Formgebung miteinander zu "verpressen" und dadurch im Strangpressprodukt eine Fügeverbindung, die sogenannte Strangpressnaht bzw. Pressnaht, zu erzeugen. Die hierfür nötigen Temperaturen und Drücke sowie eine ausreichende Scherung können mittels Strangpressprozess eingebracht werden. Auf diese Weise lassen sich unterschiedliche Werkstoffe und Legierungen während des Strangpressens verbinden. In verschiedenen Arbeiten wurde das Strangpressen von Verbunden aus unterschiedlichen metallischen Materialien untersucht und der Einfluss der Prozessgrößen auf die Verbundeigenschaften dargestellt. Auch am Forschungszentrum Strangpressen wurden in der Vergangenheit Untersuchungen zum Strangpressen von Werkstoffverbunden durchgeführt (vgl. Negendank et al., J. Mater Process Tech 212, 2012, 1954; Negendank et al., Key Enginneering Materials 554-557, 2013, 767; Nitschke et al., Magnesium - 10th International Conference on Magnesium alloys and their applications (Editor: K.U. Kainer), 2015, 478). Dabei konnte gezeigt werden, dass sich Werkstoffverbunde mit Hilfe verschiedener Verfahrensvarianten des Strangpressens herstellen lassen.

Werkstoffverbunde können mittels des Verfahrens des hydrostatischen Strangpressens mit Anwendung eines Wirkmediums hergestellt werden (vgl. Ruppin et al., Aluminium 56, 1980, 523). Hierdurch lässt sich der direkte Kontakt und damit Festkörperreibung zwischen Bolzen, Aufnehmer und Pressstempel verhindern oder vermindern (vgl. Bauser et al., Strangpressen, Aluminium-Verlag, Düsseldorf, 2001). Aus diesem Grund weist das Verfahren einen nahezu idealen Materialfluss auf und ermöglicht beispielsweise die Herstellung von zum Beispiel Cu / AI-Verbunden oder Cu / Nb3Sn-Supraleitern. Der verfahrenstechnisch bedingte Aufwand für die Bolzenvorbereitung (geometrische Anpassung der Bolzenvorderseite zur Abdichtung des Aufnehmerinhaltes in Richtung Matrize) sowie die Versuchsdurchführung (Füllung des Aufnehmers mit dem Hydrostatikmedium, Abdichten und entnehmen nach dem Pressvorgang) sind jedoch sehr arbeits-, zeit- und kostenintensiv.

Beim Verbundstrangpressen können zylindrische Multi-Material-Bolzen zum Einsatz kommen. Zum Beispiel lassen sich Magnesiumhybride durch Strangpressen formen und fügen. Allerdings führt das Pressen von Legierungspaarungen mit signifikanten Unterschieden in den Umformwiderständen zu erheblichen Schwierigkeiten beim Einstellen eines homogenen Materialflusses, was zu einem ausgeprägten Verzug im Profil führt bis hin zur Degradation des Profils im Bereich der Pressnaht. Ferner können starke Drehungen und Verschiebungen der Grenzfläche relativ zum Profilquerschnitt auftreten. Diese Effekte können von den jeweiligen Volumenanteilen und der Lage der Bolzenteile abhängen (vgl. Nitschke et al., Magnesium - 10th International Conference on Magnesium alloys and their applications (Editor: Kainer), 2015, 478).

In Verbindung mit dem koaxialen Strangpressen von Aluminium-Magnesiumverbunden wurde gezeigt, dass mittels Strangpressen Verbunde aus Magnesium und Aluminium geformt und gefügt werden können (vgl. Negendank et al., J.Mater Process Tech 212, 2012, 1954; Negendank et al., Key Enginneering Materials 554-557, 2013, 767).

Die Druckschrift EP 1 693 124 A1 zeigt ein Verfahren zum koaxialen Strangpressen eines Strangpressprodukts, wobei einen Verbundblock zuerst hergestellt und anschließend in der Aufnehmerbohrung angeordnet wird.

In der JP S60 72610 A werden zwei Werkstoffbolzen hintereinander in den gleichen Aufnehmerbohrung angeordnet.

### Zusammenfassung

Aufgabe der Erfindung ist es, ein Verfahren und eine Vorrichtung zum koaxialen Strangpressen eines Strangpressprodukts zu schaffen, mit denen Strangpressprodukte effizienter und variabler herstellbar sind.

Zur Lösung sind ein Verfahren sowie eine Vorrichtung zum koaxialen Strangpressen eines Strangpressprodukts nach den unabhängigen Ansprüchen 1 und 13 geschaffen. Ausgestaltungen sind Gegenstand von abhängigen Unteransprüchen.

Nach einem Aspekt ist ein Verfahren zum Herstellen eines Strangpressprodukts geschaffen. Hierbei wird eine Strangpressvorrichtung bereitgestellt, die Folgendes aufweist: einen Aufnehmer; eine erste Aufnehmerbohrung, die in dem Aufnehmer gebildet und in der ein erster Pressstempel angeordnet ist; eine zweite Aufnehmerbohrung, die in dem Aufnehmer innerhalb der ersten Aufnehmerbohrung und koaxial hierzu gebildet und in der ein zweiter Pressstempel angeordnet ist; und ein Formwerkzeug mit einem Formhohlraum, welcher mit der ersten und der zweiten Aufnehmerbohrung verbunden sind. Bei dem Verfahren ist weiterhin Folgendes vorgesehen: Anordnen eines ersten Werkstoffbolzens aus einem ersten Werkstoff in der ersten Aufnehmerbohrung; Anordnen eines zweiten Werkstoffbolzens aus einem zweiten Werkstoff in der zweiten Aufnehmerbohrung; und Strangpressen eines Strangpressprodukts, bei dem der erste und der zweite Werkstoff form- und stoffschlüssig verbunden sind. Das Strangpressen umfasst hierbei weiterhin Folgendes: Vorschieben des ersten Pressstempels in der ersten Aufnehmerbohrung, derart, dass hierdurch der erste Werkstoff in den Formhohlraum des Formwerkzeugs gepresst und hierbei umgeformt wird; Vorschieben des zweiten Pressstempels in der zweiten Aufnehmerbohrung, derart, dass hierdurch der zweite Werkstoff in den Formhohlraum des Formwerkzeugs gepresst und hierbei umgeformt wird; und stoff- und formschlüssiges Verbinden des ersten und des zweiten Werkstoffs zu einem Strangpressprodukt in dem Formwerkzeug.

Nach einem weiteren Aspekt ist eine Vorrichtung zum koaxialen Strangpressen eines Strangpressprodukts geschaffen, die Folgendes aufweist: einen Aufnehmer; eine erste Aufnehmerbohrung, die in dem Aufnehmer gebildet und in der ein erster Pressstempel angeordnet ist; eine zweite Aufnehmerbohrung, die in dem Aufnehmer innerhalb der ersten Aufnehmerbohrung und koaxial hierzu gebildet und in der ein zweiter Pressstempel angeordnet ist; und ein Formwerkzeug mit einem Formhohlraum, welcher mit der ersten und der zweiten Aufnehmerbohrung in Verbindung steht, derart, dass beim Strangpressen mittels Vorschieben des ersten Pressstempels in der ersten Aufnehmerbohrung und Vorschieben des zweiten Pressstempels koaxial zum ersten Pressstempels in der zweiten Aufnehmerbohrung ein erster Werkstoff eines ersten Werkstoffbolzens aus der ersten Aufnehmerbohrung und ein zweiter Werkstoff eines zweiten Werkstoffbolzens aus der zweiten Aufnehmerbohrung zum Herstellen eines Strangpressprodukts, bei dem der erste und der zweite Werkstoff form- und stoffschlüssig verbunden sind, in dem Formhohlraum einbring-bar ist.

Das Vorsehen der mindestens zwei Pressstempel, die in voneinander getrennten Aufnehmerbohrungn angeordnet sind, ermöglicht es, die Pressstempel beim Strangpressen unabhängig voneinander zu betreiben, um mittels Vorschub den jeweiligen Werkstoff in dem Formwerkzeug einzubringen.

Die Bewegung der Pressstempel beim Vorschieben erfolgt in den zugeordneten Aufnehmerbohrungn koaxial. Die Aufnehmerbohrungn können endseitig direkt an den Formhohlraum des Formwerkzeugs koppeln, so dass der Werkstoff aus einem Ausgang der Aufnehmerbohrung direkt in einen Eingang des Formhohlraums gelangt. Die Aufnehmerbohrungn bilden jeweils einen Presskanal, entlang welchem der Werkstoff mit Pressdruck beaufschlagt wird, um diesen aus der Aufnehmerbohrung in dem Formwerkzeug einzubringen und hierbei umzuformen.

Die Aufnehmerbohrungn können mit einer Zylinderform gebildet sein.

Beim Strangpressen werden die Werkstoffe in dem Formwerkzeug entlang einer Fügeverbindung (Fügenaht) stoff- und formschlüssig verbunden.

Bei den Werkstoffen kann es sich um metallische Werkstoffe unterschiedlicher Art handeln, zum Beispiel Aluminium oder Magnesium.

Die Ausbildung getrennter Aufnehmerbohrungn mit jeweiligem Pressstempel ermöglicht voneinander entkoppelte Vorschubbewegungen der Pressstempel in den Aufnehmerbohrungn.

Das stoff- und formschlüssige Verbinden kann in dem Formwerkzeug zwischen dem ersten und dem zweiten Werkstoff ausgeführt werden. Mittels der aufeinander entkoppelten Vorschubbewegung der Pressstempel in den getrennten Aufnehmerbohrungn kann die Scherspannung zwischen dem ersten und dem zweiten Werkstoff in dem Formhohlraum eingestellt und variiert werden.

Der erste und der zweite Werkstoff können mit unterschiedlicher Relativgeschwindigkeit in dem Formhohlraum eingebracht werden. Die Einstellbarkeit unterschiedlicher Relativgeschwindigkeiten ermöglicht eine Anpassung des Strangpressprozesses an unterschiedliche Werkstoffe. Auch kann der Herstellungsprozess so für die Anforderungen bei verschiedenen Strangpressprodukten optimiert werden.

Ein erster Vorschub beim Vorschieben des ersten Pressstempels in der ersten Aufnehmerbohrung und ein zweiter Vorschub beim Vorschieben des zweiten Pressstempels in der zweiten Aufnehmerbohrung können unabhängig voneinander geregelt werden. Die voneinander entkoppelte Einstell- oder Regelbarkeit des Vorschubs der Pressstempel in den getrennten Aufnehmerbohrungen ermöglicht eine individuelle Anpassung oder Lenkung des Strangpressprozesses an verschiedene Prozessführungen, beispielweise in Abhängigkeit von den Werkstoffen und / oder dem herzustellenden Strangpressprodukt.

Das Vorschieben des ersten Pressstempels in der ersten Aufnehmerbohrung kann mit einer ersten Vorschubgeschwindigkeit und das Vorschieben des zweiten Pressstempels in der zweiten Aufnehmerbohrung kann mit einer zweiten Vorschubgeschwindigkeit ausgeführt werden, die von der ersten Vorschubgeschwindigkeit verschieden ist. Mittels unterschiedlicher Vorschubgeschwindigkeiten können insbesondere die Relativgeschwindigkeiten für die Werkstoffe beim Übergang aus der Aufnehmerbohrung in den Formhohlraum des Formwerkzeugs eingestellt werden.

Der erste Pressstempel kann beim Bewegen in der ersten Aufnehmerbohrung mittels eines ersten Aktors und der zweite Pressstempel kann beim Bewegen in der zweiten Aufnehmerbohrung mittels eines zweiten Aktors angetrieben werden, welcher getrennt von dem ersten Aktor gebildet und steuerbar ist. Alternativ kann vorgesehen sein, die Presstempel mit einem Aktor zu betätigen, der den Pressstempeln gemeinsam zugeordnet ist. Der gemeinsame Aktor kann entkoppelte Aktorelemente aufweisen, die eine entkoppelte Vorschubbewegung der Presstempel bewirken können.

Als zweiter Werkstoff kann ein Werkstoff verwendet werden, welcher von dem ersten Werkstoff verschieden ist. Beispielsweise können verschiedene metallische Werkstoffe zum Einsatz kommen.

Für den ersten und den zweiten Werkstoff kann der gleiche Werkstoff verwendet werden.

Als Strangpressprodukt kann ein Strangpressprofil hergestellt werden. Das Strangpressprofil kann mit beliebigen Profilquerschnitten hergestellt werden. Mittels des Verfahrens lassen sich Strangpressprofile mit axial veränderlichen Volumenanteilen unterschiedlicher Werkstoffe herstellen. Darüber hinaus lassen sich mit geeigneten Matrizenkonstruktionen Strangpressprodukte mit axial veränderlichem Querschnitt und gleichzeitig axial veränderlichen Volumenanteilen unterschiedlicher Werkstoffe herstellen.

Es kann eine Strangpressvorrichtung bereitgestellt sein, bei der die zweite Aufnehmerbohrung in einem inneren Hohlraum des ersten Pressstempels angeordnet ist. Die Aufnehmerbohrungen können bei dieser oder anderen Ausführungsformen mit runden, eckigen oder ovalen Querschnitt gebildet sein, insbesondere kreisrund oder verschiedene von kreisrund.

Es kann eine Strangpressvorrichtung bereitgestellt sein, bei der die zweite Aufnehmerbohrung von dem inneren Hohlraum des ersten Pressstempels gebildet wird und der zweite Pressstempel formschlüssig in dem inneren Hohlraum aufgenommen ist.

Es kann eine Strangpressvorrichtung bereitgestellt sein, bei der die zweite Aufnehmerbohrung mittels eines Hülsenbauteils gebildet ist, welches in dem inneren Hohlraum des ersten Pressstempels angeordnet ist, und der zweite Pressstempel formschlüssig im Innenraum des Hülsenbauteils aufgenommen ist.

Es kann eine Strangpressvorrichtung bereitgestellt werden, bei der die erste Aufnehmerbohrung und die zweite Aufnehmerbohrung gegeneinander abgedichtet sind. Die Aufnehmerbohrungen können hierbei fluiddicht gegeneinander abgedichtet sein, insbesondere Flüssigkeitsdicht.

Die Aufnehmerbohrungen bilden eine jeweilige Aufnahme für den Pressstempel (Stempelaufnahme).

Die vorangehend in Verbindung mit dem Verfahren zum koaxialen Strangpressen eines Strangpressprodukts erläuterten Ausgestaltungen können in Verbindung mit der Vorrichtung zum koaxialen Strangpressen entsprechend vorgesehen sein.

Mittels der vorgeschlagenen Technik kann in einer Ausgestaltung vorgesehen sein, dass die einzelnen Materialströme den Formhohlraum homogen speisen, sodass innerhalb des Formhohlraums und im Bereich des Presskanals möglichst wenig Scherung in Pressrichtung erzeugt wird. Hierdurch lassen sich die Kontaktschubspannungen und auch die axialen Dehnungsdifferenzen zwischen den Werkstoffpartnern beim Fügeprozess minimieren. Es wird eine homogene Strangaustrittsgeschwindigkeit über den gesamten Querschnitt erzielt und eine schädigende Scherung im Bereich der Grenzschicht wird verhindert. In anderen Worten bedeutet das, dass Materialströme mit gleicher Fließgeschwindigkeit in dem Formhohlraum zusammen gebracht und diese durch einen Mindestdruck aneinander pressbar sind, um ein stoffschlüssiges Hybrid (Strangpressprodukt) zu erzeugen.

So können in einer Ausführungsform lokal gleich schnelle Materialströme mit unterschiedlichen Pressmaterialien realisiert werden, welche abweichende Umformwiderstände und Prozessfenster aufweisen. Bei der Anwendung einer klassischen Strangpresse mit nur einem Pressstempel ist dies nicht realisierbar Insbesondere ist es bei der Anwendung der klassischen Strangpresse mit nur einem Pressstempel nicht möglich, den Druck in den Bereichen primäre Umformzone, Schweißkammer und Presskanal auf gleichem Niveau einzustellen, um die Grenzschichtverschiebung zu verhindern.

Es kann vorgesehen sein, beim Herstellen des Strangpressprodukts den Querschnitt von stranggepressten Verbundprofilen entsprechend den im Einsatz vorherrschenden Belastungen auf Bauteile und Komponenten lokal anzupassen. Beispielsweise kann vorgesehen sein, die Wandstärke eines für eine Lastaufnahme beim Strangpressprodukt verantwortlichen Werkstoffs in ersten Bereichen dickwandiger auszuführen als in schwächer belasteten Regionen (zweite Bereiche, die von den ersten Bereichen verschieden sind), die dann mit einer geringeren Wandstärke ausgeführt werden. Die Entwicklung von belastungsangepassten, maßgeschneiderten Profilen kann das Gewicht von stranggepressten Komponenten oder Bauteilen gegenüber solchen, die über den konventionellen Herstellungsprozess erzeugt wurden, vermindern.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Vorrichtung zum Herstellen eines Strangpressprodukts;
- Fig. 2: eine perspektivische Darstellung eines Aufnehmers für eine Strangpressvorrichtung im Aufriss, bei dem ein erster und ein zweiter Presstempel einer koaxialen Anordnung entsprechend in einer ersten und einer zweiten Aufnehmerbohrung angeordnet sind;
- Fig. 3: eine schematische Darstellung einer Anordnung mit zwei Pressstempeln zum Pressen von unterschiedlich langen Werkstoffbolzen im Schnitt und
- Fig. 4: eine schematische Darstellung einer weiteren Anordnung mit zwei Pressstempeln zum Pressen von unterschiedlich langen Werkstoffbolzen im Schnitt.

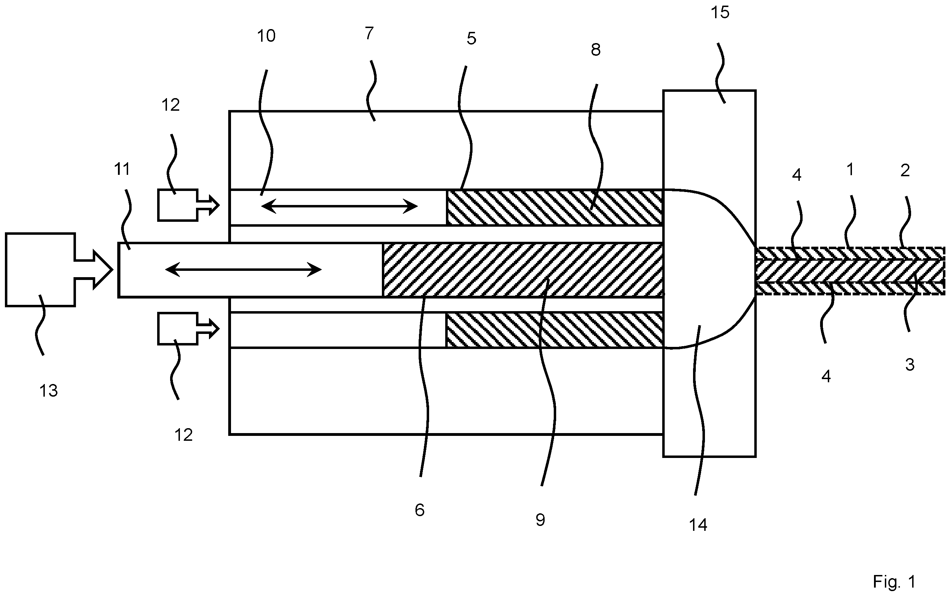

Fig. 1 zeigt eine schematische Darstellung einer Vorrichtung zum Herstellen eines Strangpressprodukts 1 mittels koaxialem Strangpressen im Schnitt. Bei dem Strangpressprodukt 1 sind ein erster Werkstoff 2 und ein zweiter Werkstoff 3 entlang einer umlaufenden Fügeverbindung oder -naht 4 form- und stoffschlüssig mittels Strangpressen miteinander verbunden sind, derart, dass der zweite Werkstoff 3 axial umlaufend vom dem ersten Werkstoff 2 umgeben ist. Bei dem Strangpressprodukt 1 kann es sich um ein Strangpressprofil handeln.

Die Formulierungen "Strangpressprofil" und "Strangpressprodukt" in den hier verwendeten Bedeutungen umfassen alle mit Hilfe des Strangpressprozesses herstellbaren Profilgeometrien. Hierzu zählen zum Beispiel sowohl Vollprofile als auch Hohlprofile sowie Halbhohlprofile in beliebigen Geometrien. So sind als Strangpressprofile beispielweise stranggepresste "Bleche" ebenso wie Rohre, Fensterprofile oder Rundstangen bekannt.

Zum Herstellen des Strangpressprodukts 1 sind in einer ersten und einer zweiten Aufnehmerbohrung 5, 6 eines Aufnehmers 7 ein erster Werkstoffbolzen 8 aus dem ersten Werkstoff 2 und ein zweiter Werkstoffbolzen 9 aus dem zweiten Werkstoff 3 angeordnet. Die erste und die zweite Aufnehmerbohrung 5, 6 stellen einen jeweiligen Kanal mit einer Zylinderform zur Verfügung, der einen runden, eckigen oder ovalen Querschnitt aufweisen kann. In den Aufnehmerbohrungen 5, 6 sind ein erster und ein zweiter Pressstempel 10, 11 angeordnet, die jeweils in axialer Richtung und hierbei zueinander koaxial in der zugeordneten Aufnehmerbohrung 5, 6 verschiebbar sind.

Der erste Pressstempel 10 ist als Hohlbauteil ausgeführt und umgibt die zweite Aufnehmerbohrung 6, wenn er in die erste Aufnehmerbohrung eingeführt ist. Eine Wandung 6a, die die zweite Aufnehmerbohrung 6 begrenzt und deren Innenseite der zweiten Aufnehmerbohrung 6 zugewandt ist, kann als getrennte Wand zwischen der ersten und der zweiten Aufnehmerbohrung 5, 6 ausgeführt sein. Alternativ, kann die zweite Aufnehmerbohrung 6 mittels eines Hohlraums in dem ersten Pressstempel 10 gebildet sein. In diesem Fall kann der zweite Pressstempel 11 beim Vorschub in dem Hohlraum des ersten Pressstempels 10 gleiten oder rutschen.

Dem ersten und dem zweiten Pressstempel 10, 11 sind ein erster und ein zweiter Aktor 12, 13 zugeordnet, welche eingerichtet sind, den jeweiligen Pressstempel 10, 11 mit Kraft zu beaufschlagen, so dass die Pressstempel 10, 11 eine koaxiale Vorschubbewegung in Richtung eines Formhohlraums 14 eines Formwerkzeugs 15 ausführen, um so den ersten und den zweiten Werkstoff 2, 3 in dem Formhohlraum 14 einzubringen. Hierzu stehen die erste und die zweite Aufnehmerbohrung 5, 6 mit dem Formhohlraum 14 in Verbindung, derart, dass das Material des ersten und des zweiten Werkstoffbolzens 8, 9 in dem Formhohlraum 14 eingebracht und hierbei umgeformt wird. Die Druckbeaufschlagung führt dazu, dass in dem Formhohlraum 14 die Fügeverbindung 4 zwischen den ersten und dem zweiten Werkstoff 2, 3 ausgebildet wird.

Gemäß der schematischen Darstellung in Fig. 1 ist der erste Aktor 12 zweiteilig oder -stückig gezeigt. Es kann sich jedoch um einen einzigen ersten Aktor handeln.

Mit Hilfe des ersten und des zweiten Aktors 12, 13, können der erste und der zweite Pressstempel 10, 11 voneinander entkoppelte Vorschubbewegungen beim Strangpressen ausführen. Insbesondere können sich der erste und der zweite Pressstempel 10, 11 mit unterschiedlicher Geschwindigkeit beim Vorschub bewegen. Mit Hilfe der unabhängigen Einstellung der beiden Vorschubbewegungen ist es ermöglicht, für den Übergang des ersten und des zweiten Werkstoffs 2, 3 in den Formhohlraum 14 unterschiedliche Fließgeschwindigkeiten einzustellen. Der erste und der zweite Werkstoff 2, 3, die einen außenliegenden und einen innenliegenden Werkstoff bilden, können zum Beispiel unterschiedliche metallische Werkstoffe sein, aber auch die Verwendung gleicher metallischer Werkstoffe für die beiden Werkstoffbolzen 8, 9 kann vorgesehen sein. Das erzeugte Strangpressprodukt 1 kann ein Strangpressprofil sein.

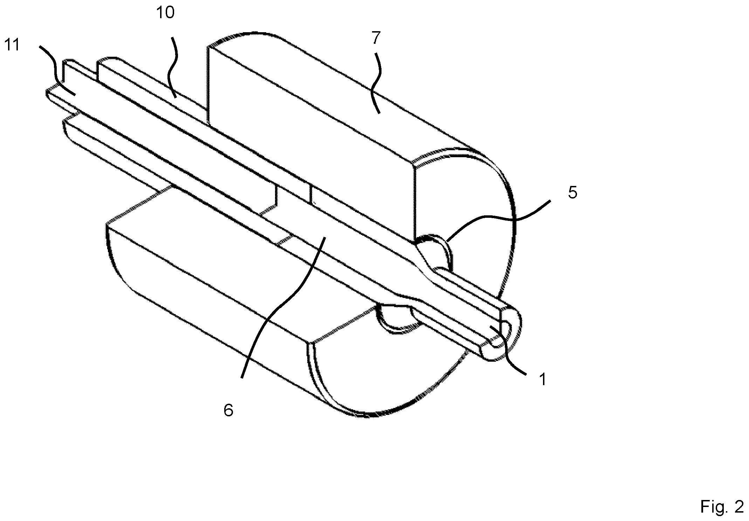

Weitere Ausführungsbeispiele werden nachfolgend unter Bezugnahme auf die Fig. 2 bis 4 erläutert. Für gleiche Merkmale werden die gleichen Bezugszeichen wie in Fig. 1 verwendet.

Fig. 2 zeigt eine schematische Darstellung einer Anordnung für eine Strangpressvorrichtung zum koaxialen Strangpressen, bei der in der ersten und der zweiten Aufnehmerbohrung 5, 6 der erste und der zweite Pressstempel 10, 11 angeordnet sind. Während der erste Pressstempel 10 als ein Hohlstempel ausgeführt ist, ist der zweite Pressstempel 11 ein Vollmaterialstempel. In dem ersten Pressstempel 10 ist die zweite Aufnehmerbohrung 6 für den zweiten Pressstempel 11 gebildet, derart, dass eine äußere Oberfläche des zweiten Pressstempels 11 und einer innere Oberfläche des ersten Pressstempels 10 einander gegenüberliegend und in Kontakt angeordnet sind.

Eine formschlüssige Abdichtung kann mittels einer zwischen Pressstempel 10, 11 und Werkstoffbolzen 8, 9 positionierte sogenannte "Pressscheibe" (nicht dargestellt). Diese findet sowohl fest - im Sinne von "konstruktiv temporär miteinander verbunden, jedoch austauschbar" - als auch lose Verwendung.

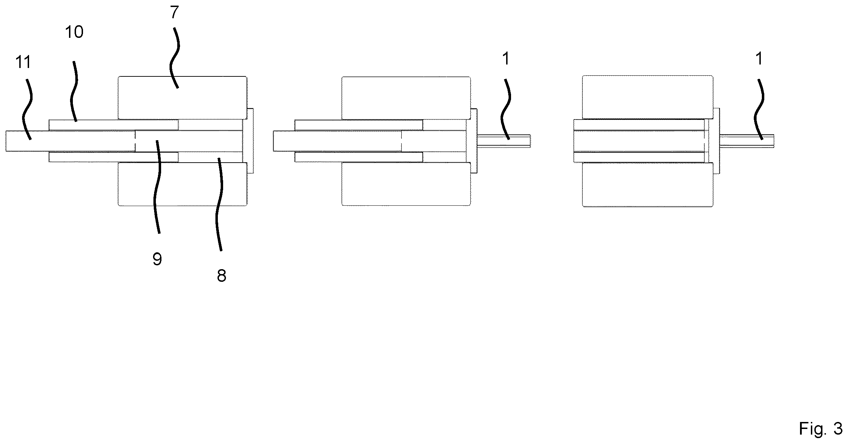

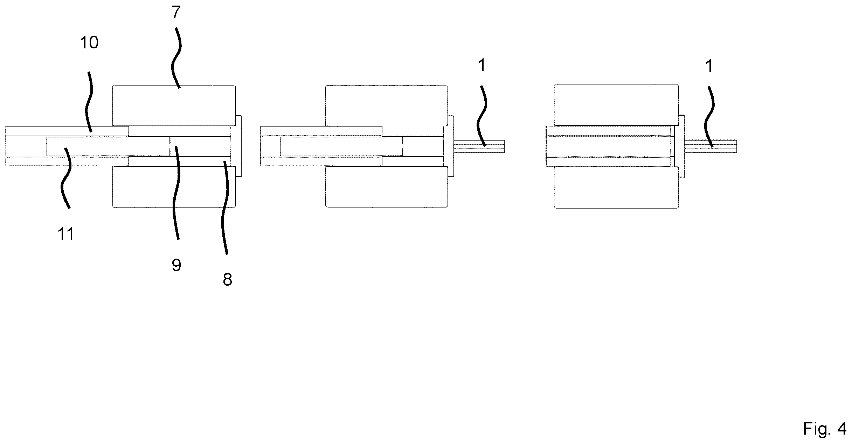

Fig. 3 zeigt eine schematische Darstellung von Elementen einer Anordnung für eine Strangpressvorrichtung zum koaxialen Strangpressen, bei der der erste und der zweite Werkstoffbolzen 8, 9 mit unterschiedlicher Bolzenlänge gebildet sind. Bei der in Fig. 3 gezeigten Ausführung ist der erste Werkstoffbolzen 8 kürzer als der zweite Werkstoffbolzen 9. In einer weiteren Ausführung gemäß Fig. 4 ist das Längenverhältnis von erstem und zweitem Werkstoffbolzen 8, 9 umgekehrt. Die Darstellungen in den Fig. 3 und 4 zeigen dann von links nach rechts den zunehmenden Vorschub des ersten und des zweiten Pressstempels 11, um das Strangpressprodukt 1 herzustellen.

Nachfolgend werden Aspekte zu weiteren Ausführungsbeispielen erläutert.

Das Verfahren zum Hybridstrangpressen mittels des Mehrstempelsystems nutzt zum Beispiel die vorangehend erläuterte Zweifachstempel-Ausführung mit dem Mehrlochrezipienten oder -aufnehmer 7 mit den mindestens zwei Bohrungen für die Aufnehmerbohrungen 5, 6 in koaxialer Anordnung und der entsprechenden Anzahl individuell verfahrbarer und steuerbarer Pressstempel 10, 11. Das Formwerkzeug 15 (Strangpressmatrize) wird durch die getrennten Materialströme gespeist. Der Formhohlraum 14 stellt eine Schweißkammer bereit, um die Teilstränge der Werkstoffe durch Einwirkung von Druck und Temperatur zu fügen.

Die Pressstempel 10, 11 bewegen das Pressgut in den Werkstoffbolzen 8, 9 in Abhängigkeit von den individuellen Volumenströmen entweder gleich schnell oder mit unterschiedlichen Geschwindigkeiten in Richtung des Formwerkzeug 15. Die einzelnen Aufnehmerbohrungen 5, 6 und entsprechenden Pressscheiben müssen nicht dieselben Durchmesser aufweisen.

Bei dem Verfahren werden die Werkstoffbolzen 8, 9 vergleichbar mit dem direkten Strangpressen durch die Aufnehmerbohrungen 5, 6 hindurch in Richtung des Formwerkzeugs 15 (Matrize) bewegt. Hierbei können aufgrund der Relativbewegung zwischen den Innenwänden der Aufnehmerbohrungen 5, 6 und den Mantelflächen der Werkstoffbolzen 8, 9 bereits große Teile der Oxide und Verunreinigungen der Pressbolzen zurückgehalten werden. Die Materialströme, welche den Formhohlraum 14 speisen, sind bereits geschert und enthalten nur noch einen geringen Teil an Verunreinigungen. In den Formhohlraum 14 Materialströme mit nahezu reinen metallischen Oberflächen ein. Diese werden in dem Formhohlraum 14 gefügt und treten als Verbundstrang (Strangpressprodukt 1) durch den Presskanal aus dem Formwerkzeug 15 aus.

In Abhängigkeit der für die einzelnen Materialströme vorgesehenen individuellen Pressverhältnisse können die Stempelgeschwindigkeiten angepasst werden, sodass, entsprechend der Produktvorgabe, definierte Volumenanteile der einzelnen Verbundpartner im Produkt realisiert werden können. Gleichzeitig wird durch die Festlegung der Volumenanteile eine definierte Positionierung der Grenzschicht erzielt.

Für den Fall des Pressens bei gleicher Geschwindigkeit beider Pressstempel 10, 11 und konstanter Bolzenlänge wird ein Profil gepresst, in dem die Verbundmaterialien in gleichem Verhältnis symmetrisch nebeneinander ausgepresst werden. Durch eine gezielt einstellbare Temperaturdifferenz zwischen beiden Werkstoffbolzen 5, 6 können Verbundflachprofile sowohl aus Materialpaarungen mit geringen als auch mit großen Unterschieden im Umformwiderstand aus separaten Containern hergestellt werden.

Für den Fall, dass beide Werkstoffe 2, 3 in unterschiedlich großen Volumenanteilen im Strangpressprodukt 1 vorliegen sollen, ergeben sich bei Beibehaltung der Aufnehmergeometrie für jeden Werkstoff (Hybridpartner) unterschiedliche Pressverhältnisse. Dem wird durch Lenkung der Bolzenlänge in Verbindung mit zwei unterschiedlich schnell verfahrenden Pressstempeln Rechnung getragen. Dazu ist es erforderlich, dass sich beide Presstempel 10, 11 weggesteuert verfahren lassen. Um die Presstempel 10, 11 autark steuern zu können, kann die Strangpresse ein separates Hydrauliksystem für die Bewegung des Presstempel 10, 11 aufweisen.

In den beschriebenen Ausführungsformen können einzelne oder mehrere der folgenden Vorteile gegenüber bekannten Strangpressverfahren erreicht werden: Thermische und tribologische Entkopplung der Werkstoffpartner; Einstellbarkeit unterschiedlicher Bolzeneinsatztemperaturen; Separate Steuerung der Fließgeschwindigkeiten der Werkstoffpartner; individuelle Anpassung der erforderlichen Prozessvariablen; und gezielte Lenkung der Materialströme für variable Volumenverhältnisse (last- / funktionsangepasste Querschnitte).

Das Verfahren ermöglicht die Herstellung von metallischen Werkstoffverbunden innerhalb eines einzigen Massivumformschritts. Mittels Einsatz von separat steuerbaren Pressstempeln und der Möglichkeit, unterschiedliche Aufnehmerbohrungen (Stempelaufnahmen) zu realisieren, lässt sich das Fließen der Werkstoffpartner mit signifikant unterschiedlichen Fließspannungen derart einstellen, dass über der kompletten Profillänge des Strangpressprodukts 1 ein definierte Werkstoffanordnung (Volumenverhältnis der Werkstoffpartner bzw. Wandstärke der Werkstoffpartner, Ausbildung der Grenzschicht) einstellbar ist.

## Patentansprüche

1. Verfahren zum koaxialen Strangpressen eines Strangpressprodukts, mit
- Bereitstellen einer Strangpressvorrichtung, aufweisend
- einen Aufnehmer (7);
- eine erste Aufnehmerbohrung (5), die in dem Aufnehmer (7) gebildet und in der ein erster Pressstempel (10) angeordnet ist;
- eine zweite Aufnehmerbohrung (6), die in dem Aufnehmer (7) innerhalb der ersten Aufnehmerbohrung (5) und koaxial hierzu gebildet und in der ein zweiter Pressstempel (11) angeordnet ist; und
- ein Formwerkzeug (15) mit einem Formhohlraum (14), welcher mit der ersten und der zweiten Aufnehmerbohrung (5, 6) verbunden sind;
- Anordnen eines ersten Werkstoffbolzens (8) aus einem ersten Werkstoff (2) in der ersten Aufnehmerbohrung (5);
- Anordnen eines zweiten Werkstoffbolzens (9) aus einem zweiten Werkstoff (3) in der zweiten Aufnehmerbohrung (6); und
- Strangpressen eines Strangpressprodukts (1), bei dem der erste und der zweite Werkstoff (2, 3) form- und stoffschlüssig verbunden sind, Folgendes aufweisend:
- Vorschieben des ersten Pressstempels (10) in der ersten Aufnehmerbohrung (5), derart, dass hierdurch der erste Werkstoff (2) in den Formhohlraum (14) des Formwerkzeugs (15) gepresst und hierbei umgeformt wird;
- Vorschieben des zweiten Pressstempels (11) in der zweiten Aufnehmerbohrung (6), derart, dass hierdurch der zweite Werkstoff (3) in den Formhohlraum (14) des Formwerkzeugs (15) gepresst und hierbei umgeformt wird, wobei der zweite Pressstempel (11) hierbei koaxial zum ersten Presstempel (10) verlagert wird; und
- stoff- und formschlüssiges Verbinden des ersten und des zweiten Werkstoffs zu einem Strangpressprodukt (1) in dem Formwerkzeug (15), derart, dass bei dem Strangpressprodukt (1) der erste Werkstoff (2) den zweiten Werkstoff (3) umgibt.

2. Verfahren nach Anspruch 1, **dadurch gekennzeichnet, dass** das stoff- und formschlüssige Verbinden in dem Formwerkzeug (15) zwischen dem ersten und dem zweiten Werkstoff (2, 3) ausgeführt wird.

3. Verfahren nach Anspruch 1 oder 2, **dadurch gekennzeichnet, dass** der erste und der zweite Werkstoff (2, 3) mit unterschiedlicher Relativgeschwindigkeit in dem Formhohlraum (14) eingebracht werden.

4. Verfahren nach mindestens einem der vorangehenden Ansprüche, **dadurch gekennzeichnet, dass** ein erster Vorschub beim Vorschieben des ersten Pressstempels (10) in der ersten Aufnehmerbohrung (5) und ein zweiter Vorschub beim Vorschieben des zweiten Pressstempels (11) in der zweiten Aufnehmerbohrung (6) unabhängig voneinander eingestellt werden.

5. Verfahren nach mindestens einem der vorangehenden Ansprüche, **dadurch gekennzeichnet, dass** das Vorschieben des ersten Pressstempels (10) in der ersten Aufnehmerbohrung (5) mit einer ersten Vorschubgeschwindigkeit und das Vorschieben des zweiten Pressstempels (11) in der zweiten Aufnehmerbohrung (6) mit einer zweiten Vorschubgeschwindigkeit ausgeführt werden, die von ersten Vorschubgeschwindigkeit verschieden ist.

6. Verfahren nach mindestens einem der vorangehenden Ansprüche, **dadurch gekennzeichnet, dass** der erste Pressstempel (10) beim Bewegen in der ersten Aufnehmerbohrung (5) mittels eines ersten Aktors (12) und der zweite Pressstempel (11) beim Bewegen in der zweiten Aufnehmerbohrung (6) mittels eines zweiten Aktors (13) angetrieben wird, welcher getrennt von dem ersten Aktor (12) gebildet und steuerbar ist.

7. Verfahren nach mindestens einem der vorangehenden Ansprüche, **dadurch gekennzeichnet, dass** als zweiter Werkstoff (3) ein Werkstoff verwendet wird, welcher von dem ersten Werkstoff (2) verschieden ist.

8. Verfahren nach mindestens einem der Ansprüche 1 bis 6, dadurch **gekennzeich** - net, dass für den ersten und den zweiten Werkstoff (2, 3) der gleiche Werkstoff verwendet wird.

9. Verfahren nach mindestens einem der vorangehenden Ansprüche, **dadurch gekennzeichnet, dass** als Strangpressprodukt (1) ein Strangpressprofil hergestellt wird.

10. Verfahren nach mindestens einem der vorangehenden Ansprüche, **dadurch gekennzeichnet, dass** eine Strangpressvorrichtung bereitgestellt wird, bei der die zweite Aufnehmerbohrung (6) in einem inneren Hohlraum des ersten Pressstempels (10) angeordnet ist.

11. Verfahren nach Anspruch 10, **dadurch gekennzeichnet, dass** eine Strangpressvorrichtung bereitgestellt wird, bei der die zweite Aufnehmerbohrung (6) von dem inneren Hohlraum des ersten Pressstempels (10) gebildet wird und der zweite Pressstempel (11) formschlüssig in dem inneren Hohlraum aufgenommen ist.

12. Verfahren nach Anspruch 10, **dadurch gekennzeichnet, dass** eine Strangpressvorrichtung bereitgestellt wird, bei der die zweite Aufnehmerbohrung (6) mittels eines Hülsenbauteils gebildet ist, welches in dem inneren Hohlraum des ersten Pressstempels (10) angeordnet ist, und der zweite Pressstempel (11) formschlüssig im Innenraum des Hülsenbauteils aufgenommen ist.

13. Vorrichtung zum koaxialen Strangpressen eines Strangpressprodukts, mit
- einen Aufnehmer (7);
- eine erste Aufnehmerbohrung, die in dem Aufnehmer (7) gebildet und in der ein erster Pressstempel (10) angeordnet ist;
- eine zweite Aufnehmerbohrung (6), die in dem Aufnehmer (7) innerhalb der ersten Aufnehmerbohrung (5) und koaxial hierzu gebildet und in der ein zweiter Pressstempel (11) angeordnet ist; und
- ein Formwerkzeug (15) mit einem Formhohlraum (14), welcher mit der ersten und der zweiten Aufnehmerbohrung (5, 6) in Verbindung steht, derart, dass beim Strangpressen mittels Vorschieben des ersten Pressstempels (10) in der ersten Aufnehmerbohrung (5) und Vorschieben des zweiten Pressstempels (11) koaxial zum ersten Pressstempels (10) in der zweiten Aufnehmerbohrung (6) ein erster Werkstoff (2) eines ersten Werkstoffbolzens (8) aus der ersten Aufnehmerbohrung (5) und ein zweiter Werkstoff (3) eines zweiten Werkstoffbolzens (9) aus der zweiten Aufnehmerbohrung (6) zum Herstellen eines Strangpressprodukts (1), bei dem der erste und der zweite Werkstoff (2, 3) form- und stoffschlüssig verbunden sind, in dem Formhohlraum (14) einbringbar ist.

## Claims

1. A method for coaxially extruding an extrusion product, comprising
- providing an extrusion device, having
- a pickup (7);
- a first pickup bore (5), which is formed in the pickup (7) and in which a first extrusion ram (10) is arranged;
- a second pickup bore (6), which is formed in the pickup (7) inside of the first pickup bore (5) and coaxially thereto, and in which a second extrusion ram (11) is arranged; and
- a die (15) with a mold cavity (14), which is connected with the first and second pickup bore (5, 7);
- arranging a first material bolt (8) made out of a first material (2) in the first pickup bore (5);
- arranging a second material bolt (9) made out of a second material (3) in the second pickup bore (6); and
- extruding an extrusion product (1), in which the first and the second materials (2, 3) are positively and materially connected, comprising:
- advancing the first extrusion ram (10) in the first pickup bore (5), such that the first material (2) is resultantly pressed into the mold cavity (14) of the die (15), and herein reshaped;
- advancing the second extrusion ram (11) in the second pickup bore (6), such that the second material (3) is resultantly pressed into the mold cavity (14) of the die (15), and herein reshaped, wherein the second extrusion ram (11) is displaced coaxially to the first extrusion ram (10);
and
- materially and positively connecting the first and the second material to an extrusion product (1) in the die (15), such that the first material (2) envelops the second material (3) in the extrusion product (1).

2. The method according to claim 1, **characterized in that** the material and positive connection is performed between the first and the second material (2, 3) in the die (15).

3. The method according to claim 1 or 2, **characterized in that** the first and the second materials (2, 3) are introduced into the mold cavity (14) at different relative speed.

4. The method according to at least one of the preceding claims, **characterized in that** a first advance while advancing the first extrusion ram (10) in the first pickup bore (5) and a second advance while advancing the second extrusion ram (11) in the second pickup bore (6) are adjusted separately from each other.

5. The method according to at least one of the preceding claims, **characterized in that** the first extrusion ram (10) in the first pickup bore (5) is advanced at a first advancing speed, and the second extrusion ram (11) in the second pickup bore (6) is advanced at a second advancing speed that differs from the first advancing speed.

6. The method according to at least one of the preceding claims, **characterized in that** the first extrusion ram (10) is driven by means of a first actuator (12) while moving in the first pickup bore (5), and the second extrusion ram (11) is driven by means of a second actuator (13), formed and controllable separately from the first actuator (12), while moving in the second pickup bore (6).

7. The method according to at least one of the preceding claims, **characterized in that** the material used as the second material (3) differs from the first material (2).

8. The method according to at least one of claims 1 to 6, **characterized in that** the same material is used for the first and the second material (2, 3).

9. The method according to at least one of the preceding claims, **characterized in that** an extrusion profile is manufactured as the extrusion product (1).

10. The method according to at least one of the preceding claims, **characterized in that** an extrusion device is provided in which the second pickup bore (6) is arranged in an inner cavity of the first extrusion ram (10).

11. The method according to claim 10, **characterized in that** an extrusion device is provided in which the second pickup bore (6) is formed by the inner cavity of the first extrusion ram (10), and the second extrusion ram (11) is positively accommodated in the inner cavity.

12. The method according to claim 10, **characterized in that** an extrusion device is provided in which the second pickup bore (6) is formed by means of a sleeve component, which is arranged in the inner cavity of the first extrusion ram (10), and the second extrusion ram (11) is positively accommodated in the interior of the sleeve component.

13. A device for coaxially extruding an extrusion product, comprising
- a pickup (7);
- a first pickup bore, which is formed in the pickup (7) and in which a first extrusion ram (10) is arranged;
- a second pickup bore (6), which is formed in the pickup (7) inside of the first pickup bore (5) and coaxially thereto, and in which a second extrusion ram (11) is arranged; and
- a die (15) with a mold cavity (14), which is connected with the first and the second pickup bore (5, 6), such that, during extrusion by advancing the first extrusion ram (10) in the first pickup bore (5) and advancing the second extrusion ram (11) coaxially to the first extrusion ram (10) in the second pickup bore (6), a first material (2) of a first material bolt (8) can be brought from the first pickup bore (5) and a second material (3) of a second material bolt (9) can be brought from the second pickup bore (6) into the mold cavity (14) in order to manufacture an extrusion product (1) in which the first and the second material (2, 3) are positively and materially connected.

## Revendications

1. Procédé, destiné à l'extrusion coaxiale d'un produit extrudé, comprenant :
- la mise à disposition d'un dispositif d'extrusion, comportant
- un réceptacle (7);
- un premier alésage récepteur (5), qui est constitué dans le réceptacle (7) et dans lequel est placé un premier poinçon de pressage (10) ;
- un deuxième alésage récepteur (6), qui est constitué dans le réceptacle (7), à l'intérieur du premier alésage récepteur (5) et de manière coaxiale à celui-ci, dans lequel est placé un deuxième poinçon de pressage (11) ; et
- un outil de formage (15), pourvu d'une cavité de formage (14), laquelle est reliée avec le premier et le deuxième alésages récepteurs (5, 6) ;
- le placement d'un premier boulon de matière (8) en une première matière (2) dans le premier alésage récepteur (5);
- le placement d'un deuxième boulon de matière (9) en une deuxième matière (3) dans le deuxième alésage récepteur (6) ; et
- l'extrusion d'un produit extrudé (1), lors de laquelle la première et la deuxième matières (2, 3) sont reliées par complémentarité de forme et par conjugaison de matières, comportant :
- l'avancement du premier poinçon de pressage (10) dans le premier alésage récepteur (5), de telle sorte que de ce fait, la première matière (2) soit pressée dans la cavité de formage (14) de l'outil de formage (15) et soit déformée à cet effet ;
- l'avancement du deuxième poinçon de pressage (11) dans le deuxième alésage récepteur (6), de telle sorte que de ce fait, la deuxième matière (3) soit pressée dans la cavité de formage (14) de l'outil de formage (15) et soit déformée à cet effet, le deuxième poinçon de pressage (11) étant déplacé à cet effet de manière coaxiale par rapport au premier poinçon de pressage (10) ;
et
- la liaison par conjugaison de matières et par complémentarité de forme de la première et de la deuxième matières en un produit extrudé (1) dans l'outil de formage (15), de telle sorte que sur le produit extrudé (1), la première matière (2) entoure la deuxième matière (3).

2. Procédé selon la revendication 1, **caractérisé en ce que** la liaison par conjugaison de matières et par complémentarité de forme dans l'outil de formage (15) est réalisée entre la première et la deuxième matière (2, 3).

3. Procédé selon la revendication 1 ou 2, **caractérisé en ce que** la première et la deuxième matière (2, 3) sont introduites avec une vitesse relative différente dans la cavité de formage (14).

4. Procédé selon au moins l'une quelconque des revendications précédentes, **caractérisé en ce qu'**une première avance lors de l'avancement du premier poinçon de pressage (10) dans le premier alésage récepteur (5) et une deuxième avance lors de l'avancement du deuxième poinçon de pressage (11) dans le deuxième alésage récepteur (6) sont réglées indépendamment l'une de l'autre.

5. Procédé selon au moins l'une quelconque des revendications précédentes, **caractérisé en ce que** l'avancement du premier poinçon de pressage (10) dans le premier alésage récepteur (5) est réalisé avec une première vitesse d'avance et l'avancement du deuxième poinçon de pressage (11) dans le deuxième alésage récepteur (6) est réalisé avec une deuxième vitesse d'avance qui est différente de la première vitesse d'avance.

6. Procédé selon au moins l'une quelconque des revendications précédentes, **caractérisé en ce que** lors du déplacement dans le premier alésage récepteur (5), le premier poinçon de pressage (10) est entraîné au moyen d'un premier actionneur (12), et lors du déplacement dans le deuxième alésage récepteur (6), le deuxième poinçon de pressage (11) est entraîné au moyen d'un deuxième actionneur (13), lequel est constitué et susceptible d'être commandé séparément du premier actionneur (12).

7. Procédé selon au moins l'une quelconque des revendications précédentes, **caractérisé en ce qu'**il est utilisé en tant que deuxième matière (3) une matière, laquelle est différente de la première matière (2).

8. Procédé selon au moins l'une quelconque des revendications 1 à 6, **caractérisé en ce que** la même matière est utilisée pour la première et la deuxième matières (2, 3).

9. Procédé selon au moins l'une quelconque des revendications précédentes **caractérisé en ce qu'**un profilé extrudé est fabriqué en tant que produit extrudé (1).

10. Procédé selon au moins l'une quelconque des revendications précédentes, **caractérisé en ce qu'**il est mis à disposition un dispositif d'extrusion sur lequel le deuxième alésage récepteur (6) est placé dans une cavité interne du premier poinçon de pressage (10).

11. Procédé selon la revendication 10, **caractérisé en ce qu'**il est mis à disposition un dispositif d'extrusion sur lequel le deuxième alésage récepteur (6) est constitué par la cavité interne du premier poinçon de pressage (10) et **en ce que** le deuxième poinçon de pressage (11) est réceptionné par complémentarité de forme dans la cavité interne.

12. Procédé selon la revendication 10, **caractérisé en ce qu'**il est mis à disposition un dispositif d'extrusion sur lequel le deuxième alésage récepteur (6) est constitué au moyen d'un élément formant manchon, lequel est placé dans la cavité interne du premier poinçon de pressage (10) et le deuxième poinçon de pressage (11) est réceptionné par complémentarité de forme dans l'espace interne de l'élément formant manchon.

13. Dispositif, destiné à l'extrusion coaxiale d'un produit extrudé, comprenant
- un réceptacle (7);
- un premier alésage récepteur, qui est constitué dans le réceptacle (7) et dans lequel est placé un premier poinçon de pressage (10);
- un deuxième alésage récepteur (6), qui est constitué dans le réceptacle (7) à l'intérieur du premier alésage récepteur (5) et de manière coaxiale à celui-ci et dans lequel est placé un deuxième poinçon de pressage (11) et
- un outil de formage (15), pourvu d'une cavité de formage (14), laquelle est en liaison avec le premier et le deuxième alésage récepteur (5, 6), de telle sorte que lors de l'extrusion au moyen de l'avancement du premier poinçon de pressage (10) dans le premier alésage récepteur (5) et de l'avancement du deuxième poinçon de pressage (11) de manière coaxiale au premier poinçon de pressage (10) dans le deuxième alésage récepteur (6), pour fabriquer un produit extrudé (1), dans lequel la première et la deuxième matières (2, 3) sont reliées par complémentarité de forme et par conjugaison de matières, une première matière (2) d'un premier boulon de matière (8) issue du premier alésage récepteur (5) et une deuxième matière (3) d'un deuxième boulon de matière (9) issue du deuxième alésage récepteur (6) soient susceptibles d'être introduites dans la cavité de formage (14).
